# EUROPEAN PATENT SPECIFICATION

(11) **EP 1 479 181 B1**
(45) Date of publication and mention of the grant of the patent: **06.07.2016**
(21) Application number: 02722651.3
(22) Date of filing: 14.03.2002
(51) Int. Cl.: H04B 10/2569

(54) **APPARATUS AND METHOD FOR MITIGATING THE EFFECTS OF POLARIZATION MODE DISPERSION**
VORRICHTUNG UND VERFAHREN ZUR REDUZIERUNG DES EINFLUSSES VON POLARISATIONSMODENDISPERSION
APPAREIL ET PROCEDE DESTINES A ATTENUER LES EFFETS DE LA DISPERSION DE MODE DE POLARISATION

(30) Priority: 28.02.2002 IT TO20020169
(43) Date of publication of application: 24.11.2004
(73) Proprietor: Telecom Italia S.p.A., 20123 Milano (IT)
(72) Inventor: RIPOSATI, Benedetto Telecom Italia S.P.A., I-10148 Torino (IT); SCHIANO, Marco Telecom Italia S.P.A., I-10148 Torino (IT)
(74) Representative: Battipede, Francesco
(86) International application number: PCT/IT2002/000158
(87) International publication number: WO 2003/073655

(56) References cited:
- EP-A- 0 909 045
- EP-A- 1 170 890
- US-A1- 2002 018 267

## Description

### Technical Field

The present relation relates to an apparatus for mitigating the effects of polarization mode dispersion in a system for transmitting signals (optical signals) over optical fiber, and to the corresponding method.

Polarization Mode Dispersion (PMD) is a distortion phenomenon affecting the optical signal propagating in single-mode optical fibers, i.e., optical fibers which transport signals in a fundamental propagation mode consisting of a pair of orthogonally polarized degenerate modes.
As is known, polarization mode dispersion is due to the presence of twofold degeneration of the optical fiber fundamental mode.
In fact, fabrication defects in real fibers (core ellipticity, external stresses, etc.) result in different group velocities for the two degenerate modes, so that the optical signal received by a reception device (receiver) is distorted.
As is known, optical signal distortion can be described in terms of first-order effects, assuming that the frequency band occupied by the optical signal is small by comparison with the bandwidth of the fiber's principal states of polarization in the Stokes space, and in terms of first- and at least second-order effects in cases where this assumption does not hold true (broad frequency band signal), as may occur for example in transmission systems with a bit-rate of 10 Gbit/s or more.
With the increasing demand for transmission systems featuring channel rates of 10 Gbit/s and over, it has become essential to attain a fuller understanding of the problems associated with polarization mode dispersion (PMD) in such contexts. Depending on the PMD levels measured on the fibers to be used, in fact, it may be necessary to adopt appropriate countermeasures in order to reduce the effects of distortion. Such countermeasures may range from simply assigning adequate system margins, to using optical PMD compensation subsystems capable of recovering the optical signal distortion caused by PMD.

The effects of first-order PMD on transmission system performance are described schematically by means of a random variable called DGD (Differential Group Delay) which represents the relative delay between the two principal states of polarization resulting from the different group velocities present in single-mode fibers.

Differential Group Delay fluctuates significantly as a function of both time and wavelength of the optical signal traveling through the fiber. It is usually characterized by the average value (mean DGD) over a certain spectral range of wavelengths and, as is known, increases in proportion to the square root of fiber length.

The mean DGD of a certain section of fiber is thus calculated by multiplying a PMD coefficient (C_{PMD}, expressed in ps/√km and generally provided by the manufacturer, at least for recently produced fibers) by the square root of fiber length expressed in km.
Mean DGD makes it possible to determine the extent of optical pulse spreading at the receiver, and thus to statistically characterize the limitations in the transmission capacity of optical fiber transmission systems which result from the fiber's PMD.

### Background Art

Even though it is now possible to fabricate fibers with extremely low PMD values, many installed fibers exhibit high PMD levels which severely restrict or prevent the deployment of high capacity systems, e.g., transmission systems with data rates of 10 Gbit/s and above.

In order to solve this problem, devices designed to compensate for PMD are currently being introduced. As PMD is random in nature, these devices are adaptive (i.e., dynamic), given that they must be able to compensate for statistical fluctuation in PMD dynamically.

Two different types of approach to compensating for PMD dynamically are known in the prior art:
- Optical compensation, accomplished by means of an optical compensator or subsystem which is independent of the optical transmission system, provided with optical input and output, and installed immediately upstream of the receiver;
- Electronic compensation, accomplished by means of an electronic compensator or subsystem which is integrated in the receiver and acts on the photo-detected signal.

As regards optical compensators, to which the object of the present invention refers, an example of a prior art system is the optical compensator described by United States Patent 5,930,414. A further example of optical distortion compensation is described by US 2002/018267. In a preferred embodiment, US 5930414 discloses that the compensator 100 (Figure 1) comprises a polarization regulating element (polarization regulator) 110 connected in series to a variable-DGD birefringent element 112 and to a splitter device (splitter) 114 capable of tapping part of the optical signal in order to apply it to a control section (feedback circuit) 115 capable of measuring the tapped signal and of dynamically controlling both the polarization regulator 110 and the variable-DGD birefringent element 112 on the basis of the measurements made.

The operating principle of the prior art compensator is as follows:
- The optical signal distorted by fiber PMD is applied at the input of the polarization regulator 110, which under the control of the control section, transforms the principal states of polarization at the fiber output into states of polarization which are appropriately aligned with the birefringence axes of the birefringent element 112;
- Thus transformed, the optical signal is sent to the input of the variable-DGD birefringent element 112, where the DGD of the optical signal's principal states of polarization, which are now aligned with the birefringence axes of the birefringent element 112, is compensated by an equal and opposite DGD;
- The portion of the signal tapped by the splitter 114 is used by the control circuit or feedback circuit 115 to measure the degree of distortion and thus make it possible to act, by means of appropriate algorithms, on the polarization regulator 110 and the birefringent element 112 in such a way as to minimize optical signal distortion dynamically.

A disadvantage of the prior art system is that the architecture as describes includes only one birefringent element 112 and thus can only compensate for first-order PMD effects, whereas second-order PMD must also be compensated, especially in systems with data rates of 10 Gbit/s and over. To compensate for second-order PMD using prior art architecture, it would be necessary to duplicate the polarization regulator 110 and the variable-DGD birefringent element 112 (compensation section) in such a way as to obtain a so-called multi-stage compensator.
As will be readily apparent to a person skilled in the art, such a solution would involve doubling the optical components used (110, 112) as well as the control variables, and would thus significantly increase the complexity of the compensator (apparatus for compensating for PMD).

### Disclosure of the Invention

The object of the present invention is an apparatus and method which make it possible to compensate for first- and second-order PMD and at the same time are simple and do not require a large number of control variables to be managed.

This object is achieved by the apparatus and method for compensating for polarization mode dispersion as claimed.

In particular, this object is achieved by the apparatus in accordance with the present invention which comprises at least two variable-DGD birefringent elements and one fixed-DGD birefringent element, all connected in series with the optical fiber transmission line.

### Brief Description of Drawings

The above and other features of the present invention will be better understood from the following description of a preferred embodiment of the invention, which is intended purely by way of example and is not to be construed as limiting, taken in conjunction with the accompanying drawings, where:
Figure 1 is a block diagram of an apparatus for compensating for PMD in accordance with the prior art; and
Figure 2 is a block diagram of an apparatus for compensating for PMD in accordance with the present invention.

### Best mode for Carrying Out the Invention

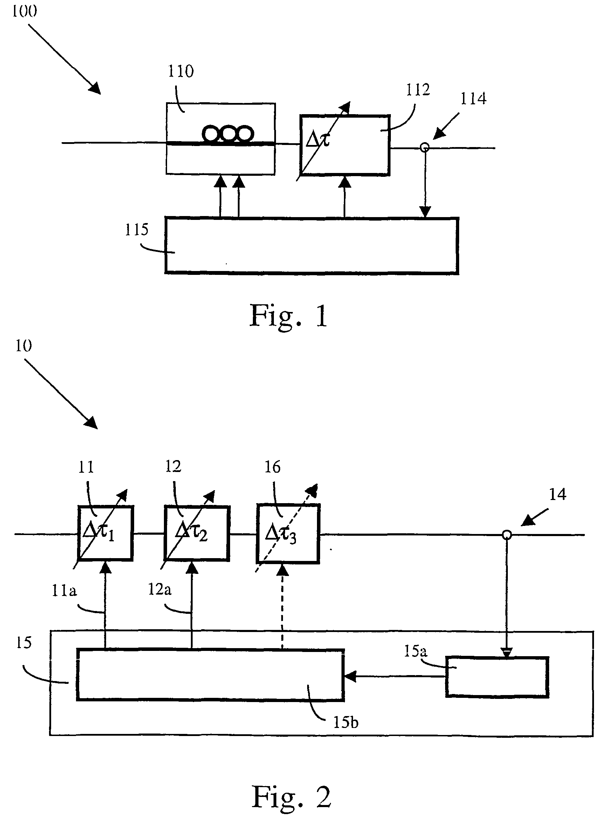

With reference to Figure 2, an apparatus 10 for mitigating or compensating for polarization mode dispersion (PMD) in an optical fiber transmission system comprises a first and a second variable-DGD birefringent element, designated as 11 and 12 respectively and connected in series, a fixed-DGD element (third element) 16, connected in tandem to the second variable-DGD element 12, a splitter 14 of known type connected to the third element 16, and a feedback circuit 15 connected to the splitter 14.

The first and second variable-DGD birefringent elements (first and second variable-DGD elements) 11 and 12 are of known type and have birefringence axes that are not mutually parallel and a birefringence value selected on the basis of the fiber PMD to be compensated.

The fixed-DGD element 16 has a birefringence axis that is not parallel to the second variable-DGD element 12. In accordance with a distinguishing feature of the present invention, the first and second variable-DGD elements 11 and 12 and the fixed-DGD element 16 are capable of selectively compensating for respective optical signal group delays, as will be described in further detail below.
In particular, and in accordance with the principal feature of the present invention, the concatenation of the three birefringent elements (11, 12 and 16) as described, makes it possible to vary all possible vectors of the principal states of polarization (PSPs) as the DGD of the two variable-DGD elements 11 and 12 varies, and thus to compensate for the DGD introduced by the optical fiber while requiring only two control variables for this purpose.

The feedback circuit 15 comprises a measuring element 15a in accordance with the prior art which is capable of measuring the degree of distortion caused by the PMD of the signal tapped by the splitter 14, and a control device 15b connected in tandem to the measuring element 15a and capable of dynamically sending control signals compensating for the optical signal distortion measured by the measuring element 15a to the first and second variable-DGD elements 11 and 12 by means of the associated control connections 11a and 11b. Specifically, the control device 15b, which may for example be based on a known microprocessor architecture, is capable of generating DGD control signals of known type on the basis of programs developed at the design stage for the apparatus 10 and stored in the control device 15b, and of transmitting said signals selectively to the first and second variable-DGD elements 11 and 12 by means of the respective connections 11a and 12a in such a way as to compensate for the distortion caused by PMD as measured by the measuring element 15a in accordance with a distinguishing feature of the present invention.

In accordance with another embodiment of the invention, the fixed-DGD birefringent element 16 may be replaced by a variable-DGD birefringent element of known type controlled via a connection 16a by the control device 15b and having a birefringence axis which is not parallel to the second variable-DGD element 12, in such a way as to obtain a further degree of freedom in the PMD compensation process.
In this second embodiment, the fact that the DGD of the third birefringent element 16 can also be varied improves the apparatus's ability to track fluctuations in the optical fiber's PSPs over time, though the introduction of a third control variable leads to an increase in complexity.

The operating principle of the apparatus 10 as described above is as follows.

The concatenation of the three birefringent elements 11, 12 and 16 of which at least two are variable constitutes a birefringent optical element characterized by a PSP vector (direction and modulus in the Stokes space) which is a function of the birefringence of the individual birefringent elements.
In particular, the concatenation of the three birefringent elements 11, 12 and 16 makes it possible to obtain a PSP vector of arbitrary direction by appropriately regulating the DGD of the first two variable-DGD elements 11 and 12, and thus to compensate for the fiber's PSP vector, whatever its direction may be.
In the same way, the concatenation makes it possible to compensate for the PSP vector modulus in a range of values that depends on the DGD values for the individual birefringent elements and which, as the result of a design decision, must be sufficiently wide to ensure the compensation of all of the DGD values arising in succession as the fiber's PMD fluctuates over time and which, in general, are known or can be determined statistically.

In accordance with other embodiments of the invention, additional variable-DGD and/or fixed-DGD elements can be cascaded in modular fashion from the first three birefringent elements 11, 12 and 16 in order to compensate for differential group delays of higher order than those considered here and measured by the measuring element 15a. Naturally, the feedback circuit in these other embodiments of the invention comprises a control connection for additional variable-DGD elements and is capable of generating a single further control signal for each additional variable-DGD element.

Furthermore, the concatenation of several birefringent elements, e.g., the three birefringent elements 11, 12 and 16, which are not mutually parallel, makes it possible to generate a PSP vector which varies as a function of the optical signal's frequency.
This variable PSP vector, which is, as is known, itself a second-order PMD effect, makes it possible to compensate for or at least mitigate the effects of the fiber's second-order PMD.

Thanks to the architecture described, the feedback circuit 15, as will be readily apparent to a person skilled in the art, requires fewer control connections and corresponding control signals than are needed in prior art systems, both in order to compensate for the effects of first- and second-order PMD, and to compensate for the effects of higher-order PMD.

The dimension, forms, materials, components, circuit elements and connections as contemplated in the foregoing description are capable of modifications in various obvious respects, as are the details of the circuitry and construction as illustrated and of the operating method, all without departing from the scope of the invention as specified in the appended claims.

## Claims

1. An apparatus for mitigating the effects of polarization mode dispersion, PMD, resulting from differential group delays, DGD, of broad frequency band optical signals in an optical fiber transmission system, **characterized by**:
- A concatenation of at least three birefringent elements (11, 12, 16) whose birefringence axes are not mutually parallel and which are connected in series to the optical fiber;
- A feedback device (15) connected to the concatenation of birefringent elements (11, 12, 16) and capable of selectively controlling the DGD of at least two of said birefringent elements (11, 12) to generate a variable vector of the principal states of polarization, PSPs, which can compensate for the effects of polarization mode dispersion.

2. An apparatus according to claim 1 **characterized in that** said concatenation of birefringent elements (11, 12, 16) comprises the following cascaded items:
- Two variable-DGD birefringent elements (11, 12); and
- One fixed-DGD birefringent element (16);
whereby said concatenation of three or more birefringent elements (11, 12, 16) can generate a vector of the principal states of polarization, PSPs, that varies as a function of the frequency of the optical signal.

3. An apparatus according to claim 1 or 2, **characterized in that** said feedback device (15) comprises
- A distortion measuring element (15a) connected at the output of said concatenation of birefringent elements (11, 12, 16) and capable of generating at least one measurement signal which is proportional to the measured distortion of the optical signal; and
- A control circuit (15b) capable of dynamically controlling said at least two birefringent elements (11, 12) in response to the measurement signal generated by the measuring element (15a).

4. An apparatus according to one of the foregoing claims **characterized in that** the birefringence axes of at least two of said birefringent elements (11, 12) in said concatenation (11, 12, 16) are mutually orthogonal.

5. A method for mitigating the effects of polarization mode dispersion, PMD, resulting from differential group delays, DGD, of broad frequency band optical signals in an optical fiber transmission system, **characterized by** the step of:
- Selectively controlling the DGD of at least two elements (11, 12) in a concatenation of at least three birefringent elements (11, 12, 16) connected in series to the optical fiber and having birefringence axes that are not mutually parallel.

6. A method according to claim 5 **characterized in that** said step of controlling comprises the steps of
- Measuring the distortion of the optical signal;
- Dynamically controlling the DGD of said at least two elements (11, 12) on the basis of the measured distortion.

## Patentansprüche

1. Vorrichtung zum Mildern der Effekte von Polarisationsmodendispersion PMD, die aus differentiellen Gruppenlaufzeiten DGD optischer breitbandiger Frequenzsignale in einem Glasfaser-Übertragungssystem resultieren, **gekennzeichnet durch**:
- eine Verknüpfung von mindestens drei doppelbrechenden Elementen (11, 12, 16), deren Doppelbrechungsachsen nicht zueinander parallel sind und die in Reihe mit der Glasfaser geschaltet sind,
- eine Rückkopplungsvorrichtung (15), die an die Verknüpfung von doppelbrechenden Elementen (11, 12, 13) angeschlossen ist und in der Lage ist, die DGD von mindestens zwei von den doppelbrechenden Elementen (11, 12) selektiv zu steuern, um einen Variablenvektor der Polarisationshauptzustände PSPs (Principal States of Polarization) zu erzeugen, der die Effekte von Polarisationsmodendispersion ausgleichen kann.

2. Vorrichtung nach Anspruch 1, **dadurch gekennzeichnet, dass** die Verknüpfung von doppelbrechenden Elementen (11, 12, 16) die folgenden hintereinander geschalteten Elemente umfasst:
- zwei doppelbrechende Elemente (11, 12) mit einer variablen DGD, und
- ein doppelbrechendes Element (16) mit einer festen DGD, wobei die Verknüpfung von drei oder mehr doppelbrechenden Elementen (11, 12, 16) einen Vektor von Hauptpolarisationszuständen PSPs erzeugen kann, der als eine Funktion der Frequenz des optischen Signals variiert.

3. Vorrichtung nach Anspruch 1 oder 2, **dadurch gekennzeichnet, dass** die Rückkopplungsvorrichtung (15) umfasst:
- ein Verzerrungsmesselement (15a), das am Ausgang der Verknüpfung von doppelbrechenden Elementen (11, 12, 16) angeschlossen ist und in der Lage ist, mindestens ein Messsignal zu erzeugen, das zu der gemessenen Verzerrung des optischen Signals proportional ist, und
- eine Steuerschaltung (15b), die in der Lage ist, die mindestens zwei doppelbrechende Elemente (11, 12) als Antwort auf das von dem Messelement (15a) erzeugte Messsignal dynamisch zu steuern.

4. Vorrichtung nach einem der vorhergehenden Ansprüche, **dadurch gekennzeichnet, dass** die Doppelbrechungsachsen von mindestens zwei von den doppelbrechenden Elementen (11, 12) in der Verknüpfung (11, 12, 16) senkrecht zueinander sind.

5. Verfahren zum Mildern der Effekte von Polarisationsmodendispersion PMD, die aus differentiellen Gruppenlaufzeiten DGD optischer breitbandiger Frequenzsignale in einem Glasfaser-Übertragungssystem resultieren, **gekennzeichnet durch** die folgenden Schritte:
- selektives Steuern der DGD von mindestens zwei Elementen (11, 12) in einer Verknüpfung von mindestens drei doppelbrechenden Elementen (11, 12, 16), die in Reihe mit der Glasfaser geschaltet sind und Doppelbrechungsachsen aufweisen, die nicht zueinander parallel sind.

6. Verfahren nach Anspruch 5, **dadurch gekennzeichnet, dass** der Schritt des Steuerns die folgenden Schritte umfasst:
- Messen der Verzerrung des optischen Signals,
- dynamisches Steuern der DGD von den mindestens zwei Elementen (11, 12) auf der Grundlage der gemessenen Verzerrung.

## Revendications

1. Appareil destiné à atténuer les effets de la dispersion modale de polarisation, ou DMP, résultant des retards de groupes différentiels, ou RGD, de signaux optiques à large bande de fréquence dans un système de transmission par fibre optique, **caractérisé par** :
- une concaténation d'au moins trois éléments biréfringents (11, 12, 16) dont les axes de biréfringence ne sont pas parallèles l'un par rapport à l'autre et qui sont connectés en série à la fibre optique ;
- un dispositif de rétroaction (15) connecté à la concaténation des éléments biréfringents (11, 12, 16) et capable de commander, de manière sélective, le RGD d'au moins deux desdits éléments biréfringents (11, 12) afin de générer un vecteur variable des états principaux de polarisation, ou EPP, qui peut compenser les effets de la dispersion modale de la polarisation.

2. Appareil selon la revendication 1, **caractérisé en ce que** ladite concaténation des éléments biréfringents (11, 12, 16) comprend les unités en cascade suivantes :
- deux éléments biréfringents (11, 12) à RGD variable ; et
- un élément biréfringent (16) à RGD fixe ;
grâce à quoi ladite concaténation de trois ou plus éléments biréfringents (11, 12, 16) peut générer un vecteur des états principaux de polarisation, ou EPP, qui varie en fonction de la fréquence du signal optique.

3. Appareil selon la revendication 1 ou 2, **caractérisé en ce que** ledit dispositif de rétroaction (15) comprend :
- un élément de mesure de la distorsion (15a) connecté à la sortie de ladite concaténation des éléments biréfringents (11, 12, 16) et capable de générer au moins un signal de mesure qui est proportionnel à la distorsion mesurée du signal optique ; et
- un circuit de commande (15b) capable de commander de manière dynamique lesdits au moins deux éléments biréfringents (11, 12) en réponse au signal de mesure généré par l'élément de mesure (15a).

4. Appareil selon l'une des revendications précédentes, **caractérisé en ce que** les axes de biréfringence d'au moins deux desdits éléments biréfringents (11, 12) dans ladite concaténation (11, 12, 16) sont orthogonaux l'un par rapport à l'autre.

5. Procédé pour atténuer les effets de la dispersion modale de polarisation, ou DMP, résultant des retards de groupes différentiels, ou RGD, de signaux optiques à large bande de fréquence dans un système de transmission par fibre optique **caractérisé par** l'étape consistant à :
- commander, de manière sélective, le RGD d'au moins deux éléments biréfringents (11, 12) dans une concaténation d'au moins trois éléments biréfringents (11, 12, 16) connectés en série à la fibre optique et ayant des axes de biréfringence qui ne sont pas parallèles l'un par rapport à l'autre.

6. Procédé selon la revendication 5, **caractérisé en ce que** ladite étape de commande comprend les étapes consistant à :
- mesurer la distorsion du signal optique ;
- commander de manière dynamique le RGD desdits au moins deux éléments (11, 12) en se fondant sur la distorsion mesurée.
